# EUROPEAN PATENT APPLICATION

(11) **EP 2 685 712 A1**
(43) Date of publication of application: **15.01.2014**
(21) Application number: 12755118.2
(22) Date of filing: 02.03.2012
(51) Int. Cl.: H04N 5/64, G02B 27/02, H04N 13/04

(54) **HEAD-MOUNTED DISPLAY**

(30) Priority: 06.03.2011 JP 2011048424
(71) Applicant: Sony Corporation, Tokyo 108-0075 (JP)
(72) Inventor: KURA, Junpei, Tokyo 108-0075 (JP); MITSUI, Takeo, Tokyo 108-0075 (JP); SAKAGUCHI, Masayuki, Tokyo 108-0075 (JP)
(74) Representative: Ealey, Douglas Ralph
(86) International application number: PCT/JP2012/055325
(87) International publication number: WO 2012/121129

(57) **Abstract**

A head mount display used in a state worn on the head of a user is provided.

In a worn state, a forehead support 102 comes in contact with the forehead of the user, and an upper band 104 and a lower band 105 of the headband come in contact with the back of the head. That is, the head mount display is worn on the head of the user with a three-point support by the forehead support 102, the upper band 104, and the lower band 105. Thus, unlike a structure similar to glasses whose weight is mainly supported by a nose piece, the head mount display can be worn while easing the strain on the user by distributing the load of the device over the entire head.

## Description

### TECHNICAL FIELD

The present invention relates to a head mount display used in a state worn around the head of a user, and in particular to a head mount display worn around the head while being adjusted according to an increase in the entire weight of the device and an individual difference in the size of the head or the like of each user.

### BACKGROUND ART

Display devices to be worn around the head to view video, that is, head mount displays (HMD) have been widely known. A head mount display includes a display unit for each of left and right eyes, and is combined with a headphone and configured to be capable of visual and audio control. A configuration to perfectly shut out the outside world while being worn around the head increases virtual reality during viewing. Furthermore, a head mount display is also capable of showing different pictures to the left and right eyes, and can present three-dimensional images by displaying images with a parallax for the left and right eyes.

A head mount display is a display system that provides a user with virtual images (that is, focus virtual images on the retinas). Note that a virtual image is an image formed on the side of an object when the object is nearer to a lens than the focal length. In order to make a user view virtual images, the distance from the user at which the virtual images are formed or the like is preferably varied depending on video, for example. For example, a display device that provides virtual images in a form suitable for video has been proposed (refer to Patent Document 1, for example).

A head mount display is similar to glasses for correcting vision in having left and right independent optical systems. Thus, a head mount display with a structure having rims for supporting left and right display units and left and right temples respectively connected to side edges of the left and right rims at the outer corners of the eyes similarly to glasses is known (refer, for example, to Patent Documents 2 and 3). In this type of structure, the head mount display is supported by the left and right rims in contact with a nosepiece formed at the inner corners of the eyes and by end covers at the tips of the left and right temples over the ears

Since, however, a head mount display typically has heavy loads such as display units including optical components made of glass materials and an electric circuit board concentrated on a body at the front, the head mount display can hardly be used for a long time by the way of wearing instructed by a nosepiece and left and right temples as described above owing to excessive loads applied to the nose of the user. Obviously, upper ends of ear lobes over which the end covers of the temples are placed will hurt.

### CITATION LIST

### PATENT DOCUMENTS

Patent Document 1: Japanese Patent Application Laid-Open No. 2007-133415
Patent Document 2: Japanese Patent No. 4609256
Patent Document 3: Japanese Patent Application Laid-Open No. 2009-134276

### SUMMARY OF THE INVENTION

### PROBLEMS TO BE SOLVED BY THE INVENTION

An object of the present invention is to provide an excellent head mount display capable of being worn around the head while being adjusted according to an increase in the entire weight of the device and an individual difference in the size of the head or the like of each user.

### SOLUTIONS TO PROBLEMS

The present application has been made in view of the aforementioned problems, and the invention described in claim 1 is a head mount display including: a display unit for left eye configured to display an image for a left eye; a display unit for right eye configured to display an image for a right eye; a body including the display unit for left eye and the display unit for right eye; a forehead support arranged on an upper part of the body; and a headband connected to a back of the body and including an upper band and a lower band.

According to the invention described in claim 2 of the present application, the headband of the head mount display according to claim 1 has an entire length adjusting mechanism for adjusting an entire length thereof.

According to the invention described in claim 3 of the present application, the forehead support of the head mount display according to claim 1 has a height adjusting mechanism for adjusting a height thereof from the upper part of the body.

According to the invention described in claim 4 of the present application, the lower band of the head mount display according to claim 1 is made of a stretchable material, and parts of the headband other than the lower band are made of a soft but hardly stretchable material.

According to the invention described in claim 5 of the present application, the forehead support of the head mount display according to claim 1 has a wearable sensor configured to operate in conjunctions with a motion of a forehead coming in contact with a head to detect that the head mount display is worn by a user.

According to the invention described in claim 6 of the present application, the upper band and the lower band of the head mount display according to claim 1 each have a length adjusting part.

According to the invention described in claim 7 of the present application, the respective length adjusting parts provided for the upper band and the lower band of the head mount display according to claim 1 are arranged at off-center positions of the upper band and the lower band.

### EFFECTS OF THE INVENTION

According to the present invention, an excellent head mount display capable of being worn around the head while being adjusted according to an increase in the entire weight of the device and an individual difference in the size of the head or the like of each user can be provided.

The head mount display according to the present invention has a mechanism to be worn around the head of a user with a three-point support by a forehead support, a lower band and an upper band, and can be worn without making the user notice the loads. Furthermore, since a mechanism for adjusting the entire length of a headband having the upper band and the lower band is provided and a mechanism for adjusting the height of the forehead support is further provided, adjustment to a wide variety of individual differences in the size of the head of the user is possible.

Other objects, features and advantages of the present invention will be apparent from the following detailed description of the present invention and the accompanying drawings.

### BRIEF DESCRIPTION OF DRAWINGS

Fig. 1A is a view of a head mount display according to the present proposal as viewed in a certain direction.
Fig. 1B is a view of the head mount display according to the present proposal as viewed in a certain direction.
Fig. 1C is a view of the head mount display according to the present proposal as viewed in a certain direction.
Fig. 1D is a view of the head mount display according to the present proposal as viewed in a certain direction.
Fig. 2 is a view for explaining a way of being supported on the head and an adjustable wearing mechanism of the head mount display according to the present proposal.
Fig. 3 is a view depicting only a headband extracted from the head mount display.
Fig. 4 is a view showing the positions where functions accompanying the wearing mechanism are provided.
Fig. 5 is a view showing an exemplary configuration of a wearable sensor equipped on a forehead support 102.
Fig. 6A is a view showing a height adjusting mechanism equipped on the forehead support 102.
Fig. 6B is a view showing the height adjusting mechanism equipped on the forehead support 102.
Fig. 7A is a view showing an exemplary configuration of length adjusting parts applied to an upper band 104 and a lower band 105.
Fig. 7B is a view showing the exemplary configuration of the length adjusting parts applied to the upper band 104 and the lower band 105.
Fig. 8 is a view showing an exemplary configuration of an entire length adjusting mechanism of the headband.
Fig. 9 is a view showing an exemplary configuration of a mechanism for adjusting the position in the frontward and backward direction and the vertical position of a headphone.
Fig. 10 is a diagram schematically showing a configuration of an image display system including the head mount display.

### MODE FOR CARRYING OUT THE INVENTION

An embodiment of the present invention will be described in detail below with reference to the drawings.

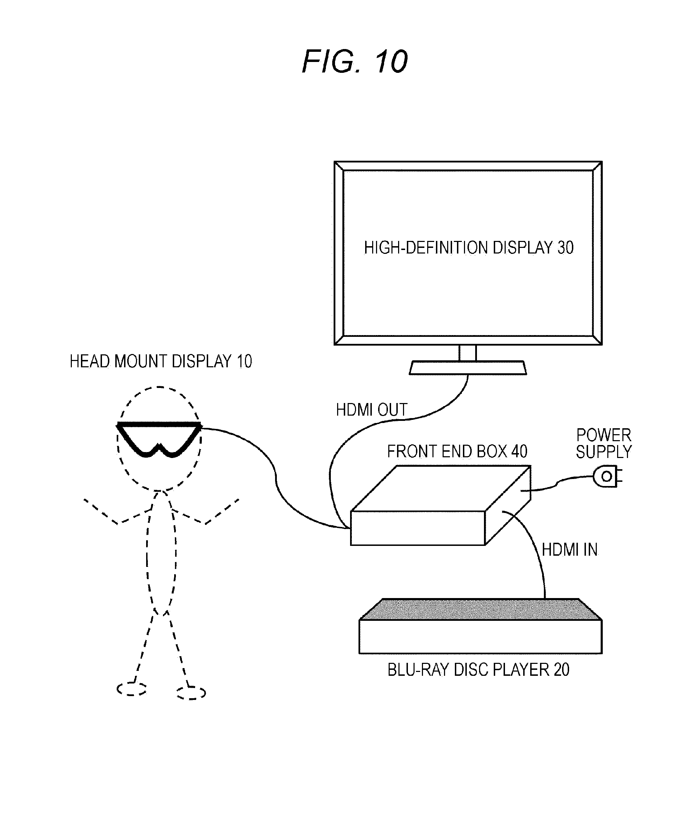

Fig. 10 shows a configuration of an image display system including a head mount display. The shown system includes a body of a head mount display 10, a Blu-ray disc player 20 that is a source of contents to be viewed, a high-definition display (an HDMI-compatible television, for example) 30 to which contents reproduced by the Blu-ray disc player 20 are output, and a front end box 40 that processes AV signals output from the Blu-ray disc player 20.

The front end box 40 corresponds to an HDMI repeater that processes an AV signal output from the Blu-ray disc player 20 and input in HDMI and outputs the signal in HDMI, for example. The front end box 40 is also a two output switcher that switches the output of the Blu-ray disc player 20 between the head mount display 10 and the high-definition display 30.

While the front end box 40 has two outputs in the shown example, the front end box 40 may have three or more outputs. The front end box 40, however, has an output exclusive for AV signals and gives first priority to output to the head mount display 10. While the power of the head mount display 10 is on or while the user is using the head mount display 10, AV signals are output only to the head mount display 10. Conversely, AV signals are output to the high-definition television 30 (or another display, not shown, connected to the front end box 40) with lower priority only while the user is not using the head mount display 10 such as while the power of the head mount display 10 is off or while the head mount display 10 is not connected.

Note that HDMI (High-Definition Multimedia Interface) is an interface standard for digital appliances mainly for the purpose of transmitting audio and video based on DVI (Digital Visual Interface) and using TMDS (Transition Minimized Differential Signaling) at the physical layer. This system is compliant with HDMI1.4, for example.

The connections between the Blu-ray disc player 20 and the front end box 40 and between the front end box 40 and the high-definition display 30 are made by HDMI cables. While the connection between the front end box 40 and the head mount display 10 can also be made by an HDMI cable, the connection is made by a proprietary cable and AV signals are serially transferred thereby in the present embodiment. Note that AV signals and power are supplied by one cable connecting the front end box 40 and the head mount display 10, and the head mount display 10 can also be supplied with driving power through this cable.

A head mount display includes a display unit for each of left and right eyes, and is combined with a headphone and configured to be capable of visual and audio control. A head mount display is similar to glasses for correcting vision in having left and right independent optical systems. Thus, a head mount display with a structure having rims for supporting left and right display units and left and right temples respectively connected to side edges of the left and right rims at the outer corners of the eyes similarly to glasses is known. Since, however, a head mount display typically has heavy loads concentrated on a front part, the head mount display can hardly be used for a long time owing to excessive loads applied to the nose of the user.

In the following, therefore, a head mount display having a cap-like structure of a band-like structure wrapping the entire circumference of the head and capable of being worn while easing the strain on the user by distributing the load of the device over the entire head will be proposed.

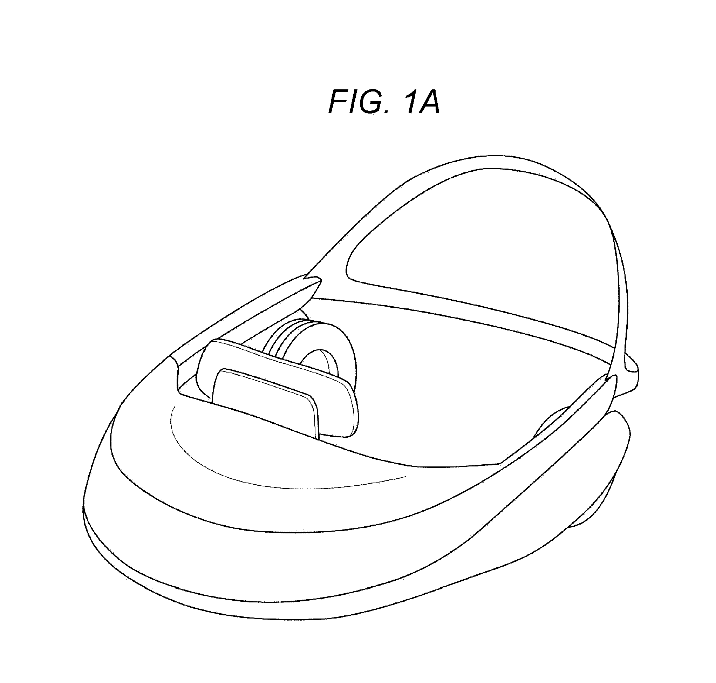

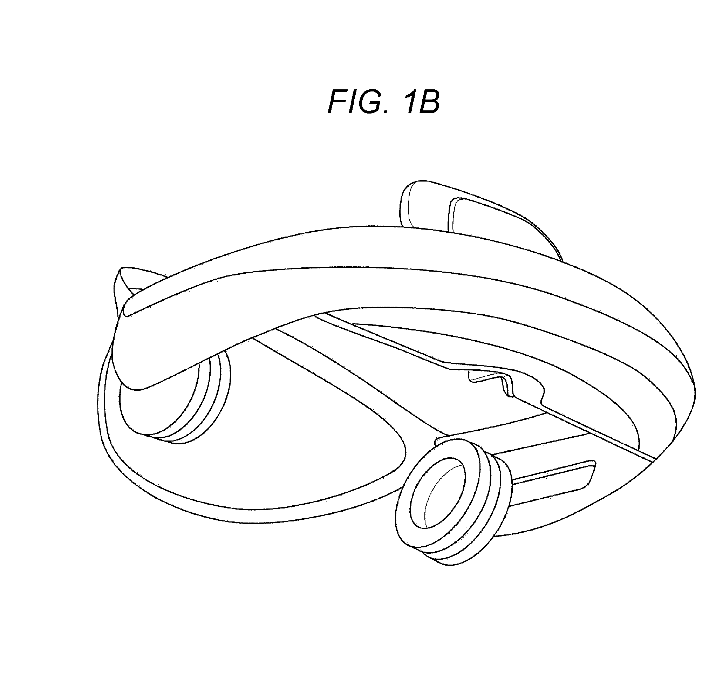

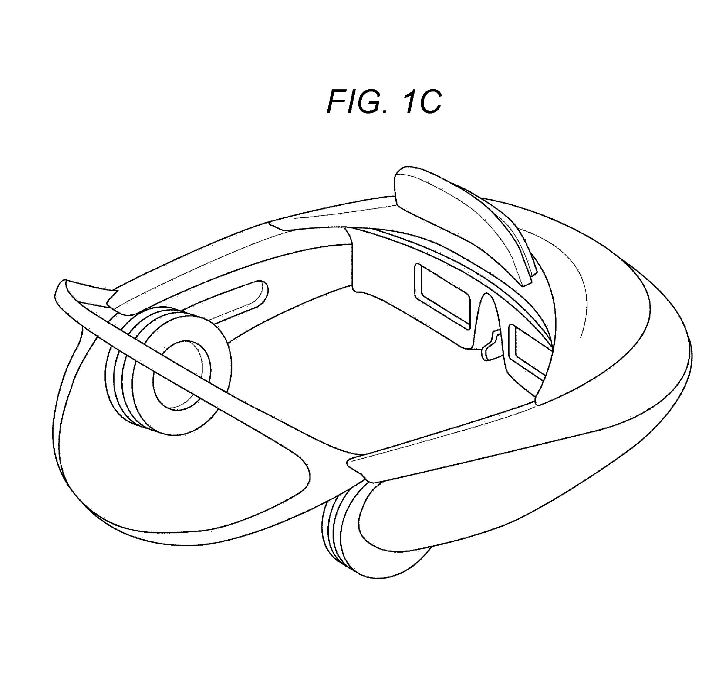

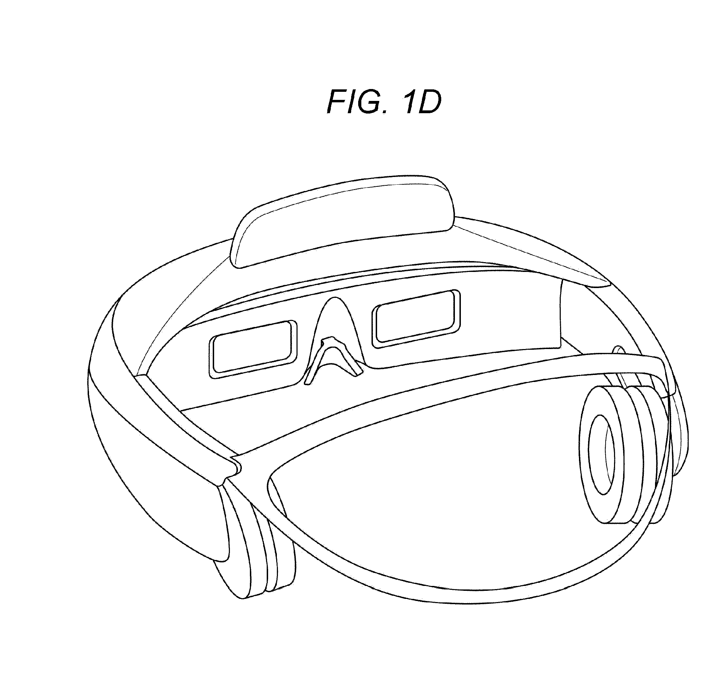

Figs. 1A to 1D show a head mount display according to the present proposal as viewed in various directions. With the cap-like structure as shown, the load of the device can be distributed over the entire head even if heavy loads are concentrated on the front part of the body, and the device can be worn while easing the strain on the user. Although a cap-like head mount display itself can be found before the present application, methods for adjustment when the weight of the device is further increased and according to the individual difference in the size of the head of each user are unclear.

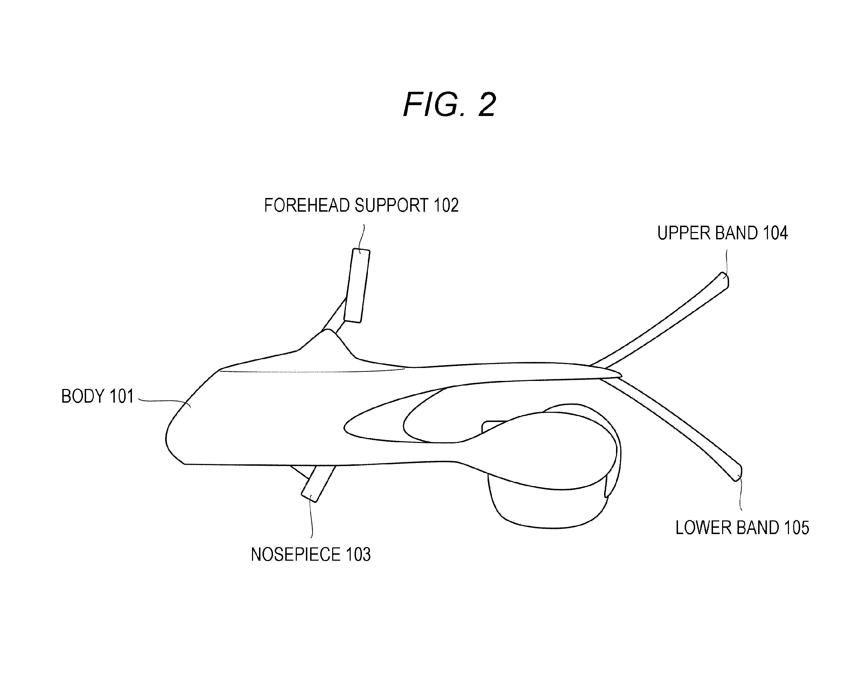

Fig. 2 schematically illustrates a way of being supported on the head and an adjustable wearing mechanism of the head mount display according to the present proposal.

The head mount display includes a body 101 containing most components including a display system, a forehead support 102 protruding from an upper face of the body 101, a headband (110) branching into an upper band 104 and a lower band 105, and left and right headphones. The body 101 accommodates a display unit and a circuit board therein. In addition, a nosepiece 103 is formed in a shape corresponding to the back of the nose under the body 101.

When the user wears the head mount display on the head, the forehead support 102 comes in contact with the forehead of the user and the upper band 104 and the lower band 105 of the headband come in contact with the back of the head. That is, the head mount display is worn on the head of the user with a three-point support by the forehead support 102, the upper band 104, and the lower band 105. Thus, unlike glasses whose weight is mainly supported by a nose piece, the head mount display can be worn while easing the strain on the user by distributing the load of the device over the entire head. Although the shown head mount display also has the nosepiece 103, the nosepiece 103 only contributes to supplementary support. Furthermore, the motion of the head mount display in the rotational direction can be supported by tightening the forehead support with the headband so that the head mount display will not turn from the head of the user on which the head mount display is worn.

Note that the headband includes an entire length adjusting mechanism that is movable by a single latch and released by a release button at a position before the branch into the upper band 104 and the lower band 105, allowing the user to adjust the entire length of the headband by a single operation. The height of the forehead support 102 can be adjusted, allowing a wider wearable range of the individually different size of the head of the user. Details of functions accompanying these wearing mechanisms will be described later.

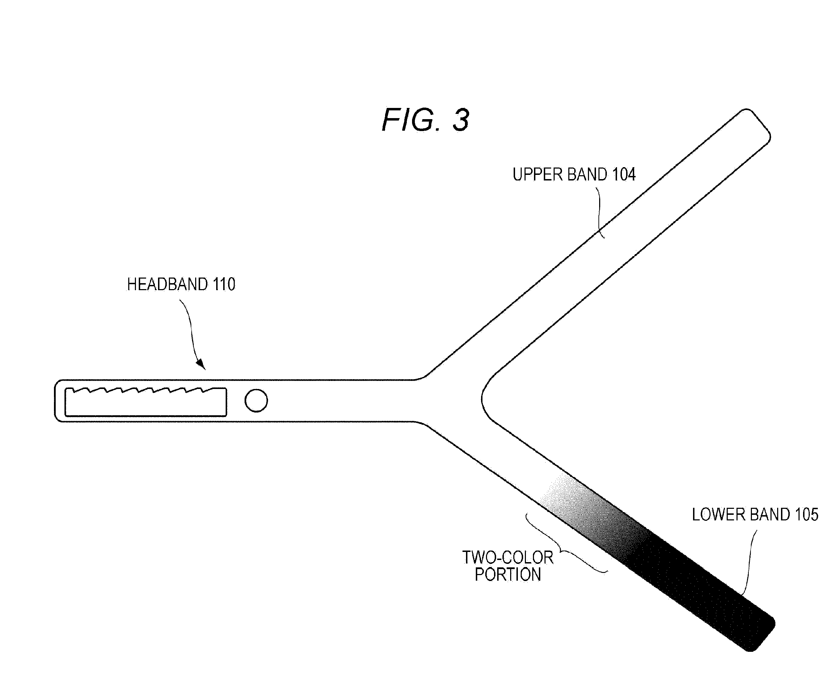

Fig. 3 depicts only the headband extracted from the head mount display. The headband 110 is made of a material that is soft but non-stretchable such as nylon or polypropylene.

The upper band 104 is soft and curved along the head so as to support the load when worn, but hardly stretches so as to prevent the head mount display from dropping off.

The lower band 105, on the other hand, is made of a stretchable material such as silicon rubber or elastomer, and can be formed as a part integrated with the upper band 104 by two-color formation using different types of materials. As expressed by shading in Fig. 3, a gradual change from the non-stretchable material to the stretchable material is produced by providing a range where the amounts of the materials gradually change. The lower band 105 supports the head mount display by holding the head by the elasticity of the rubber in combination with the forehead support 102.

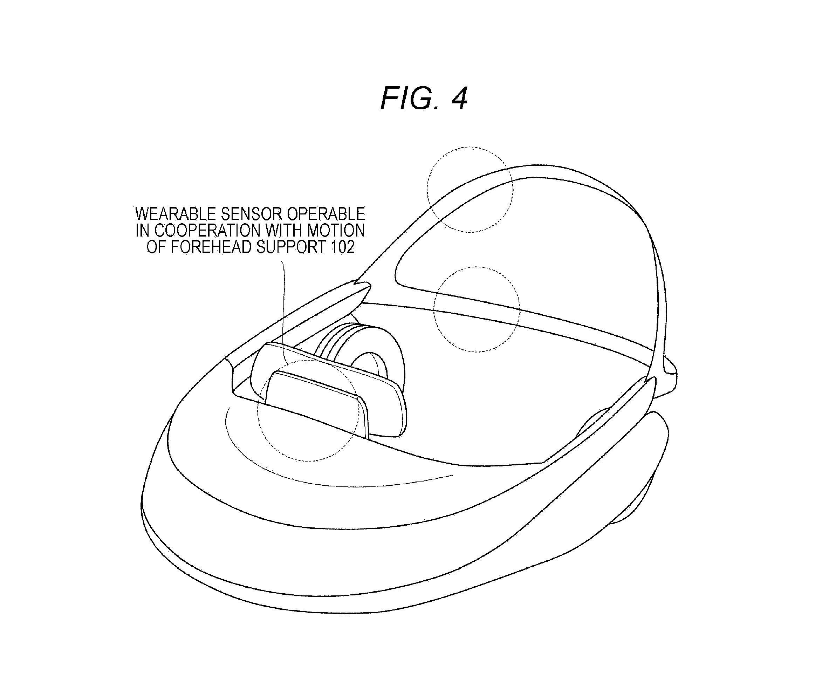

In Fig. 4, the positions where the functions accompanying the wearing mechanism are provided are shown by circles in broken lines.

The forehead support 102 is equipped with a wearable sensor that operates in conjunction with the motion of the forehead coming in contact with the head when the head mount display is worn on the head of the user to detect that the head mount display is worn by the user.

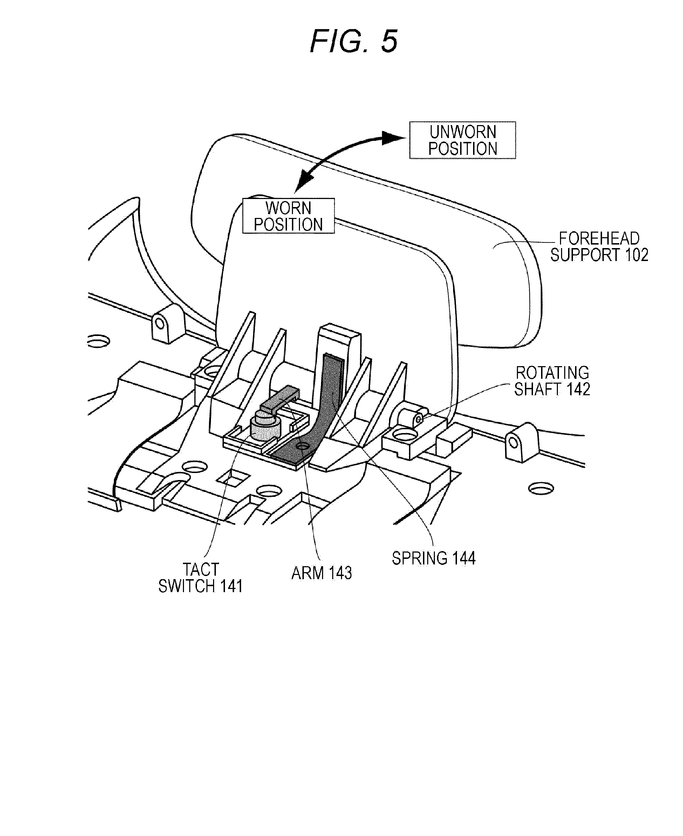

Fig. 5 shows an exemplary configuration of the wearable sensor equipped on the forehead support 102. In the shown example, the forehead support 102 is turnably supported on an outer housing of the head mount display 10 by a rotating shaft 142. In an unworn state, the forehead support 102 is pushed out to an unworn position backward of the head mount display 10, that is, toward the forehead of the user wearing the head mount display 10 by the restoring force of the spring 144. In a worn state, on the other hand, the forehead 102 is pushed back to a forward worn position as a result of the forehead of the user coming in contact thereto. In addition, the rotating shaft 142 is attached with an arm 143 protruding forward. In the worn state, the forehead support 102 is turned by about 10 degrees about the rotating shaft 142. Thus, when the forehead support 102 is pushed back forward as a result of being worn by the user, the arms 143 moves in conjunction therewith and operates a tact switch 141 with a front end portion thereof. The operation of the tact switch 141 allows detection that the head mount display 10 is worn by the user.

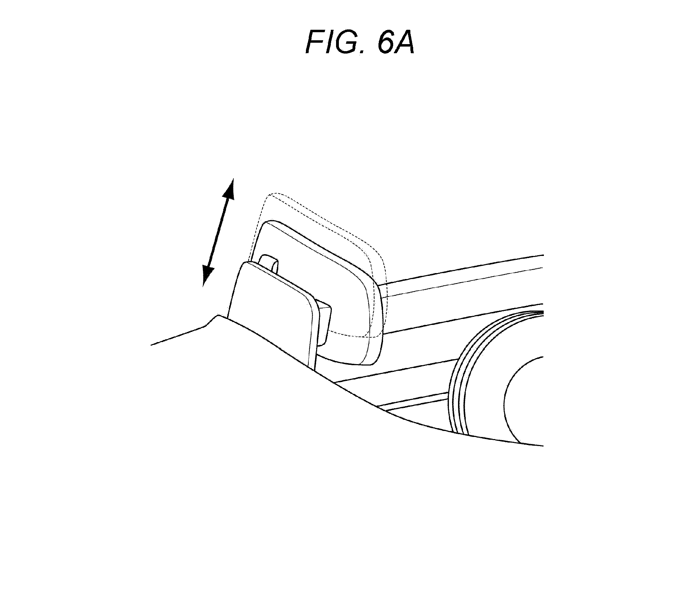

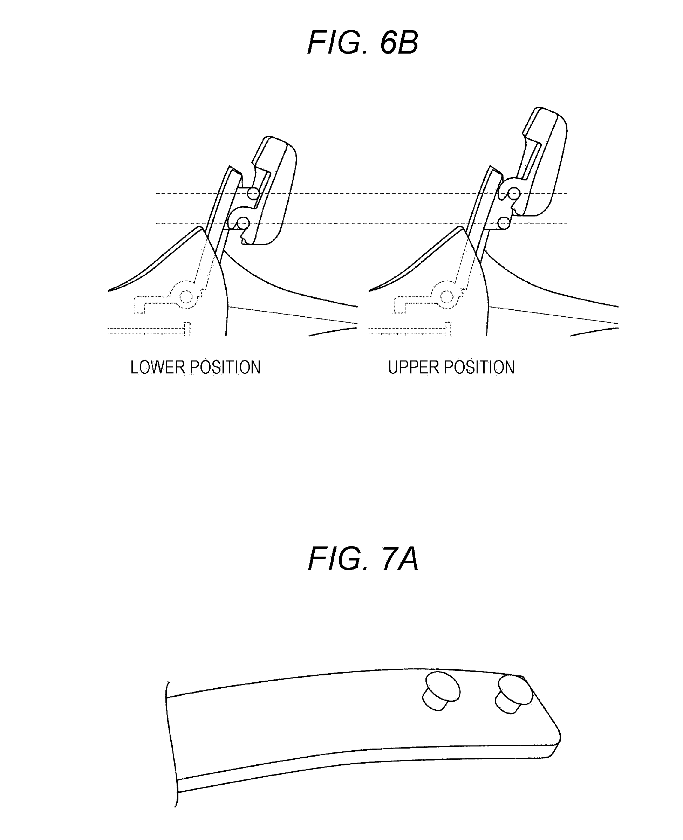

Figs. 6A and 6B show a height adjusting mechanism equipped on the forehead support 102.

Fig. 6 shows a state in which the height of the forehead support 102 is switched by the operation of the height adjusting mechanism. In Fig. 6A, the forehead support 102 set at a lower position is shown by a solid line and the forehead support 102 set at an upper position is shown by a broken line. As shown, the wearable range of the individually different size of the head of the user can be made wider by adjusting the height of the forehead 102 from the lower position to the upper position.

The height adjustment for the forehead support 102 is not limited to a specific mechanism. For example, the height can be easily adjusted by making the forehead support 102 detachable, providing an attachment position for the lower position and an attachment position for the upper position, and performing operation of reattaching the forehead support 102. The left part of Fig. 6B shows of the forehead support 102 attached to the lower position and the right part of Fig. 6B the forehead support 102 attached to the upper position in sectional views.

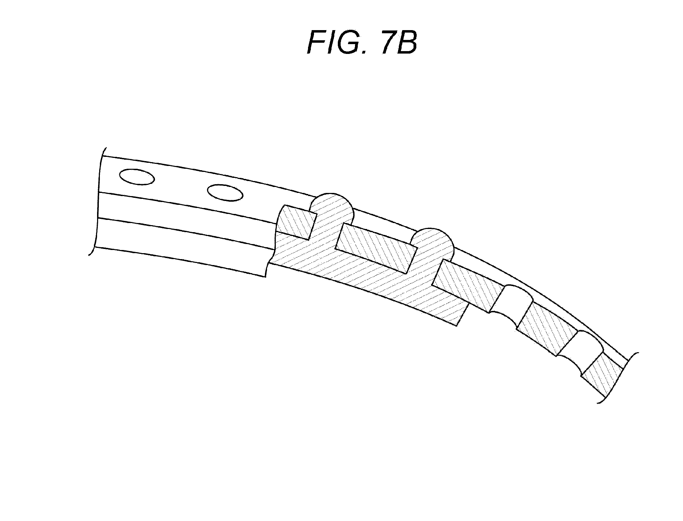

Referring back to Fig. 4, length adjusting parts are provided in the portions of the upper band 104 and the lower band 105 in the circles in broken lines. Figs. 7A and 7B show an exemplary configuration of the length adjusting parts applied to the upper band 104 and the lower band 105. In the shown example, the upper band 104 and the lower band are each separated at an off-center position surrounded by the broken line. One of the separated portions has two or more protrusions formed at regular intervals in the lengthwise direction. The other thereof has holes that engage with the protrusions formed at the same intervals as the protrusions, the number of the holes being larger than that of the protrusions. The lengths of the upper band 104 and the lower band 105 are determined depending on which holes the protrusions engage with. Furthermore, since the respective lengths of the upper band 104 and the lower band 105 are determined independently, the lengths can be adjusted according to the individual difference in the shape of the back of the head of each user.

Note that, as a result of arranging the length adjusting parts as shown in Figs. 7A and 7B at the off-center positions of the upper band 104 and the lower band, the back of the head of the user will not interfere with the length adjusting parts when the user uses a reclining seat.

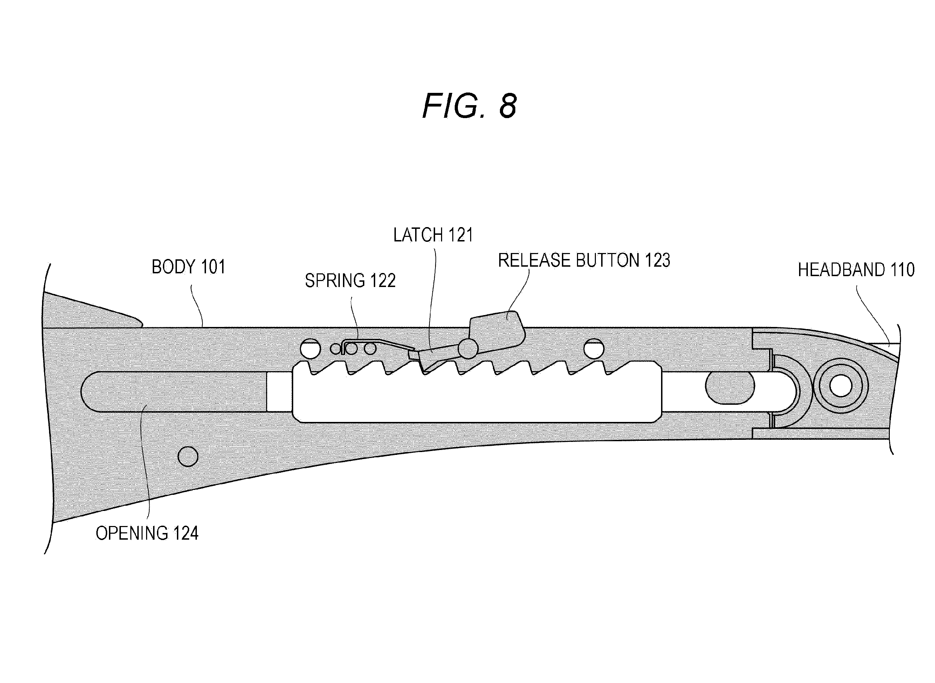

It has already been mentioned above that the entire length of the headband 110 can be adjusted and that the headband 110 is movable by a single latch and released by a release button. Fig. 8 shows an exemplary configuration of the entire length adjusting mechanism of the headband 110. The shown entire length adjusting mechanism may be placed at one of right and left ends of the headband 110.

The headband 110 has a protruding part having a rack toothed along a side face in the lengthwise direction at an end thereof. On the other hand, the body 101 has an opening 124 that accommodates the protruding part with the rack at a corresponding end thereof. Accordingly, the entire length of the headband 110 is changed by the movement in the lengthwise direction of the protruding part with the rack guided by the opening 124.

Furthermore, the body 110 has a single latch 121 having a front end in a shape in engagement with the rack and turnably supported at a position along the opening 124, and the restoring force of a spring 122 acts in a direction pushing the front end of the single latch 121 downward. The headband 110 is thus fixed at a position where the front end of the single latch 121 is engagement with the rack, whereby the entire length thereof is determined.

Furthermore, a release button 123 is formed at the other end of the single latch 121. The release button 123 is exposed to outside and can be operated by the user. When the user presses the release button 123, the front end of the single latch 121, on the other hand, moves up and the locked state with the rack is released. As a result, the protruding part with the rack can be guided by the opening 124 to move in the lengthwise direction, and the entire length of the headband 110 can be adjusted. The user can therefore adjust the entire length of the headband 110 by a single operation of the single latch 121.

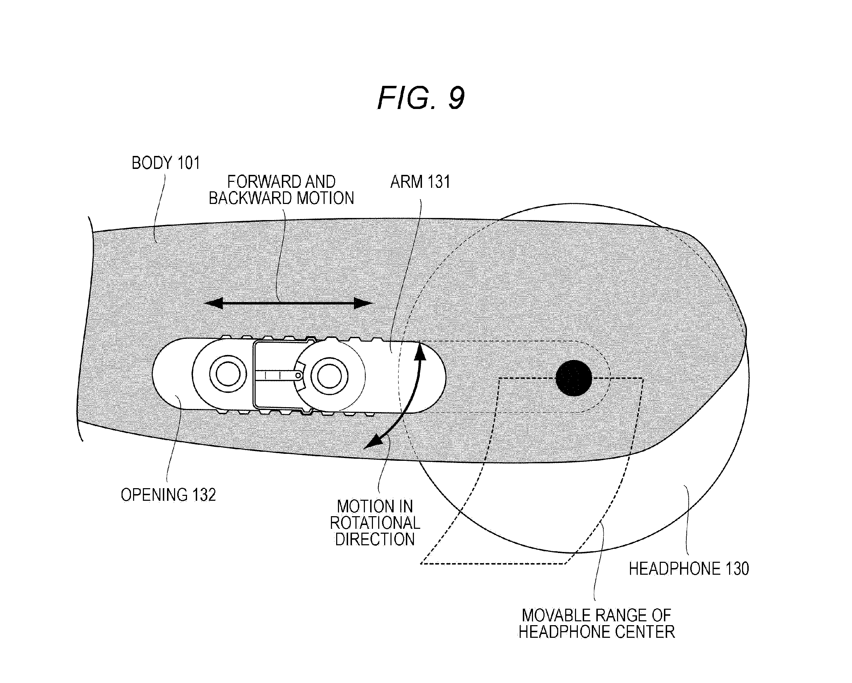

It has already been mentioned above that the head mount display has left and right headphones. Fig. 9 shows a mechanism for adjusting the position in the frontward and backward direction and the vertical position of the left headphone. Although not shown, the same mechanism is also provided for the right headphone in a symmetrical manner.

A headphone 130 is turnably supported by an arm 131 and can move in the vertical direction of the body by turning. The body 101 also has an opening 132 that accommodates the arm 131 and is formed in the forward and backward direction. The arm 131 can also be guided by the opening 132 to move in the forward and backward direction of the body.

In Fig. 9, the movable range of the center of the headphone 130 by combination of the turning operation about the arm 131 and the movement of the arm 131 in the forward and backward direction along the opening 132 is shown by a circle in a broken line. In this manner, the position of the headphone 130 can be adjusted within a two-dimensional range.

### INDUSTRIAL APPLICABILITY

The present invention has been described in detail above with reference to a certain embodiment. It is appreciated, however, that those skilled in the art can make modification and substitution in the embodiment without departing from the scope of the present invention.

The wearing mechanism proposed in the present specification can also be applied to various types of display devices used in a state worn by the user on the head such as three-dimensional glasses used in a time-division stereoscopic video display system in addition to head mount displays.

In short, the present invention has been disclosed in an exemplary manner and the description in the present specification should not be interpreted in a limited manner. The claims should be referred to for determining the scoped of the present invention.

### REFERENCE SIGNS LIST

- 10: Head mount display
- 20: Blu-ray disc player
- 30: High-definition display
- 40: Front end box
- 102: Forehead support
- 103: Nosepiece
- 104: Upper band
- 105: Lower band
- 110: Headband
- 121: Single latch
- 122: Spring
- 123: Release button
- 124: Opening
- 141: Tact switch
- 142: Rotating shaft
- 143: Arm
- 144: Spring

## Claims

1. A head mount display comprising:
a display unit for left eye configured to display an image for a left eye;
a display unit for right eye configured to display an image for a right eye;
a body including the display unit for left eye and the display unit for right eye;
a forehead support arranged on an upper part of the body; and
a headband connected to a back of the body and including an upper band and a lower band.

2. The head mount display according to claim 1, wherein the headband has an entire length adjusting mechanism for adjusting an entire length thereof.

3. The head mount display according to claim 1, wherein the forehead support has a height adjusting mechanism for adjusting a height thereof from the upper part of the body.

4. The head mount display according to claim 1, wherein the lower band is made of a stretchable material, and parts of the headband other than the lower band are made of a soft but hardly stretchable material.

5. The head mount display according to claim 1, wherein the forehead support has a wearable sensor configured to operate in conjunctions with a motion of a forehead coming in contact with a head to detect that the head mount display is worn by a user.

6. The head mount display according to claim 1, wherein the upper band and the lower band each have a length adjusting part.

7. The head mount display according to claim 6, wherein the respective length adjusting parts are arranged at off-center positions of the upper band and the lower band.
